(19) Europäisches Patentamt
European Patent Office
Office européen des brevets

(11) EP 1 609 361 A2

(12) **EUROPÄISCHE PATENTANMELDUNG**

(43) Veröffentlichungstag:
**28.12.2005 Patentblatt 2005/52**

(51) Int Cl.[7]: **A01N 51/00**, A01N 47/40

(21) Anmeldenummer: **05021241.4**

(22) Anmeldetag: **17.07.1995**

(84) Benannte Vertragsstaaten:
**AT BE CH DE DK ES FR GB GR IE IT LI NL PT SE**

(30) Priorität: **28.07.1994 DE 4426753**

(62) Dokumentnummer(n) der früheren Anmeldung(en) nach Art. 76 EPÜ:
**95926913.5 / 0 772 397**

(71) Anmelder: **Bayer CropScience Aktiengesellschaft**
**40789 Monheim (DE)**

(72) Erfinder:
- **Dutzmann, Stefan**
  **40764 Langenfeld (DE)**
- **Erdelen, Christoph**
  **deceased (DE)**
- **Andersch, Wolfram**
  **51469 Bergisch Gladbach (DE)**
- **Dehne, Heinz-Wilhelm**
  **53125 Bonn (DE)**
- **Hartwig, Jürgen**
  **42799 Leichlingen (DE)**
- **Stenzel, Klaus**
  **40595 Düsseldorf (DE)**
- **Krämer, Wolfgang**
  **51399 Burscheid (DE)**

Bemerkungen:
Diese Anmeldung ist am 29-09-2005 als Teilanmeldung zu der unter INID-Kode 62 erwähnten Anmeldung eingereicht worden.

(54) **Mittel zur Bekämpfung von Pflanzenschädlingen**

(57) Die vorliegende Erfindung betrifft Mittel zur Bekämpfung von Pflanzenschädigungen, die Verbindungen der der allgemeinen Formel (I)

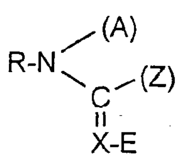

(I),

in welcher

X für =CH- oder =N- steht,

E für einen elektronenziehenden Rest steht,

R für gegebenenfalls substituiertes Heteroatylalkyl steht,

A für Wasserstoff, Alkyl oder für eine bifunktionelle Gruppe steht, die mit dem Rest Z verknüpft ist, steht,

Z für Alkyl, -NH-Alkyl, -N(Alkyl)$_2$ oder für eine bifunktionelle Gruppe steht, die mit dem Rest A verknüpft ist,

in Mischung mit fungiziden Wirkstoffen, ausgenommen Cyclopropylcarboxamidderivaten und Azolylmethylcycloalkanen enthalten.

EP 1 609 361 A2

## Beschreibung

Die vorliegende Erfindung betrifft Schädlingsbekämpfungsmittel die eine Wirkstoffkombination bestimmter Agonisten oder Antagonisten der nicotinergen Acetylcholinrezeptoren von Insekten mit Fungiziden enthalten, ihre Herstellung und ihre Verwendung zur Bekämpfung von Pflanzenschädlingen.

Agonisten oder Antagonisten der nicotinergen Acetylcholinrezeptoren von Insekten sind bekannt, z.B. aus den folgenden Publikationen:

Europäische Offenlegungsschriften Nr. 464 830, 428 941, 425 978, 386 565, 383 091, 375 907, 364 844, 315 826, 259 738, 254 859, 235 725, 212 600, 192 060, 163 855, 154 178, 136 636, 303 570, 302 833, 306 696, 189 972, 455 000, 135 956, 471 372, 302 389; Deutsche Offenlegungsschriften Nr. 3 639 877, 3 712 307; Japanische Offenlegungsschriften Nr. 03 220 176, 02 207 083, 63 307 857, 63 287 764, 03 246 283, 04 9371, 03 279 359, 03 255 072; US-Patentschriften Nr. 5 034 524, 4 948 798, 4 918 086, 5 039 686, 5 034 404; PCT-Anmeldungen Nr. WO 91/17 659, 91/4965; Französische Anmeldung Nr. 2 611 114; Brasilianische Anmeldung Nr. 88 03 621.

Auf die in diesen Publikationen beschriebenen Methoden, Verfahren, Formeln und Definitionen sowie auf die darin beschriebenen einzelnen Präparationen und Verbindungen wird hiermit ausdrücklich Bezug genommen.

Fungizide Wirkstoffe, wie Azol-Derivate, Arylbenzylether, Benzamide, Morpholin-Verbindungen und andere Heterocyclen sind bekannt (vgl. K.H. Büchel "Pflanzenschutz und Schädlingsbekämpfung", Seiten 140 bis 153, Georg Thieme-Verlag, Stuttgart 1977, EP-OS 0 040 345, DE-OS 2 324 010, DE-OS 2 201 063, EP-OS 0 112 284, EP-OS O 304 758 und DD-PS 140 412).

Mischungen bestimmter Nitromethylenderivate mit fungiziden Wirkstoffen und ihre Verwendung als Schädlingsbekämpfungsmittel im Pflanzenschutz sind bereits bekannt (US-P-4 731 385; JP-OS 63-68507, 63/68505; 63/72 608; 63/72 609, 63/72 610). Mischungen bestimmter offenkettiger Nitromethylene und Nitroguanidine mit Fungiziden sind bereits bekannt (JP-OS 30 47 106; US-P 5 181 587).

Mischungen von Cyclopropylcarboxamiden mit bestimmten Nitromethylenen- oder Nitroguanidinderivaten sind bereits bekannt (JP-OS 3 271 207;

Mischungen von u.a. Imidacloprid und fungiziden Wirkstoffen zur Anwendung im Materialschutz und gegen Termiten, nicht aber zur Anwendung gegen pflanzenschädigende Schädlinge sind bereits bekannt (EP-OS (Nit 259)). Mischungen von Imidacloprid und Azolylmethylcycloalkanen insbesondere Triticonazol sind bekannt aus EP-OS 545 834.

Es ist **jedoch noch nichts** darüber bekannt geworden, daß sich Nitroguanidinderivate und Fungizide mit Ausnahme von Cyclopropylcarboxamiden und Triticonazol in über Wirkung gegenseitig so günstig beeinflussen, daß sie bei guter Pflanzenverträglichkeit in hervorragender Weise als Bekämpfungsmittel gegen Pflanzenschädlinge eingesetzt werden können.

Die vorliegende Erfindung betrifft Mittel gegen Pflanzenschädlinge, die Verbindungen der allgemeinen Formel (I)

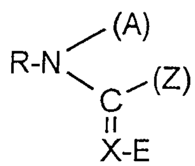

(I),

in welcher

X für -CH= oder =N- steht,

E für einen elektronenziehenden Rest, insbesondere Nitro oder Cyano, steht,

R für gegebenenfalls substituiertes Heteroarylalkyl steht,

A für Wasserstoff, Alkyl oder für eine bifunktionelle Gruppe steht, die mit dem Rest Z verknüpft ist, steht,

Z für Alkyl, -NH, Alkyl, $-N(Alkyl)_2$ oder für eine bifunktionelle Gruppe steht, die mit dem Rest A verknüpft ist,

in Mischung mit fungiziden Wirkstoffen, ausgenommen Cyclopropylcarboxamidderivaten und Azolylmethylcycloalkanen enthalten.

Bevorzugt betrifft die Erfindung Mittel gegen Pflanzenschädlinge, die als Verbindungen der Formel (I) solche enthalten, in denen die Reste folgende Bedeutung haben:

X steht für =CH- oder =N-,

E steht für $NO_2$ oder CN,

R steht für Heteroarylmethyl, Heteroarylethyl mit bis zu 6 Ringatomen und N, O, S, insbesondere N als Heteroatome.
Im einzelnen seien genannt Thienyl, Furyl, Thiazolyl, Imidazolyl, Pyridyl, die gegebenenfalls substituiert sind.
Als Substituenten seien beispielhaft und vorzugsweise aufgeführt:
Alkyl mit vorzugsweise 1 bis 4, insbesondere 1 oder 2 Kohlenstoffatomen, wie Methyl, Ethyl, n- und i-Propyl und n-, i- und t-Butyl; Alkoxy mit vorzugsweise 1 bis 4, insbesondere 1 oder 2 Kohlenstoffatomen, wie Methoxy, Ethoxy, n- und i-Propyloxy und n-, i- und t-Butyloxy; Alkylthio mit vorzugsweise 1 bis 4, insbesondere 1 oder 2 Kohlenstoffatomen, wie Methylthio, Ethylthio, n- und i-Propylthio und n-, i- und t-Butylthio; Halogenalkyl mit vorzugsweise 1 bis 4, insbesondere 1 oder 2 Kohlenstoffatomen und vorzugsweise 1 bis 5, insbesondere 1 bis 3 Halogenatomen, wobei die Halogenatome gleich oder verschieden sind und als Halogenatome, vorzugsweise Fluor, Chlor oder Brom, insbesondere Fluor stehen, wie Trifluormethyl; Hydroxy; Halogen, vorzugsweise Fluor, Chlor, Brom und Jod, insbesondere Fluor, Chlor und Brom; Cyano; Nitro; Amino; Monoalkylund Dialkylamino mit vorzugsweise 1 bis 4, insbesondere 1 oder 2 Kohlenstoffatomen je Alkylgruppe, wie Methylamino, Methyl-ethyl-amino, n- und i-Propylamino und Methyl-n-butylamino;

A steht für Wasserstoff, $C_{1-4}$-Alkyl, insbesondere Methyl oder Ethyl,

Z steht für $C_{1-4}$-Alkyl, insbesondere Ethyl oder Methyl, -NH($C_{1-4}$-Alkyl), -N($C_{1-4}$-Alkyl) oder

A und Z bilden gemeinsam mit den Atomen, an welche sie gebunden sind, einen gesättigten oder ungesättigten heterocyclischen Ring bilden. Der heterocyclische Ring kann weitere 1 oder 2 gleiche oder verschiedene Heteroatome und/oder Heterogruppen enthalten. Als Heteroatome stehen vorzugsweise Sauerstoff oder Stickstoff und als Heterogruppen N-Alkyl, wobei Alkyl der N-Alkyl-Gruppe vorzugsweise 1 bis 4, insbesondere 1 oder 2 Kohlenstoffatome enthält. Als Alkyl seien Methyl, Ethyl, n- und i-Propyl und n-, i- und t-Butyl genannt. Der heterocyclische Ring enthält 5 bis 7, vorzugsweise 5 oder 6 Ringglieder.
Als Beispiele für den heterocyclischen Ring seien Pyrrolidin, Piperidin, Thiazolidin, Piperazin, Imidazolidin, Hexamethylenimin, Hexahydro-1,3,5-triazin, Morpholin genannt, die gegebenenfalls bevorzugt durch Methyl substituiert sein können.

Ganz besonders bevorzugt seien Verbindungen der allgemeinen Formeln (Ia) und (Ib) genannt:

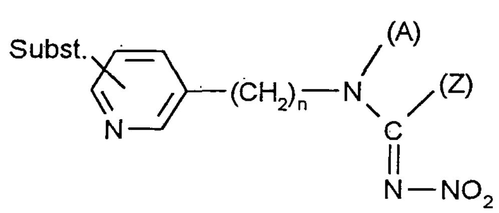

(Ia),

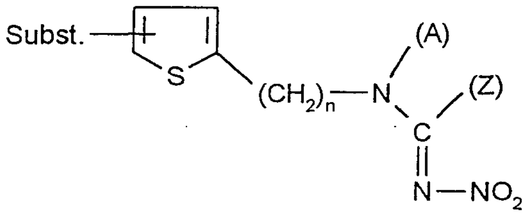

(Ib),

in welchen

n für 1 oder 2 steht,

Subst für einen der oben aufgeführten Substituenten, insbesonders für Halogen, ganz besondere für Chlor, steht,

A und Z die oben angegebenen bevorzugten Bedeutungen haben,

Im einzelnen seien folgende Verbindungen genannt:

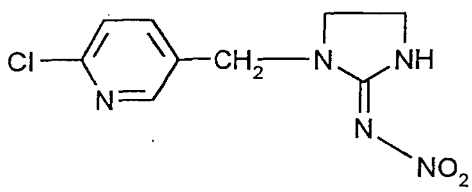

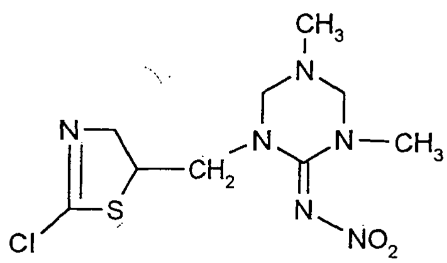

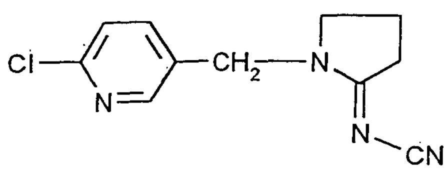

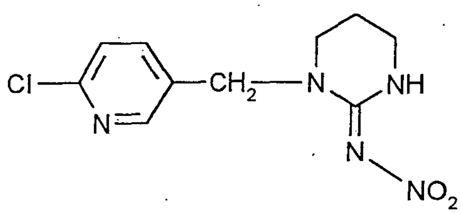

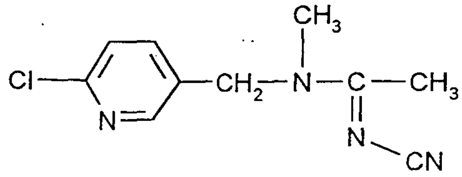

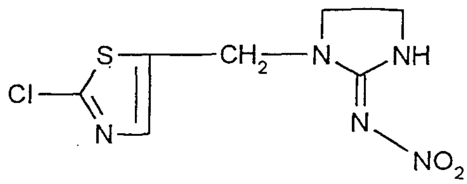

Als Fungizide in den erfindungsgemäßen Mitteln zur Bekämpfung von Pflanzenschädlingen seien beispielsweise genannt:

(1) Azol-Derivate der Formel

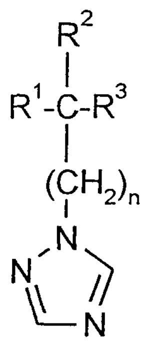

(II)

(II-1) $R^1$ = 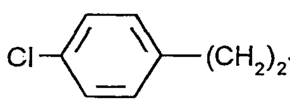 $(CH_2)_2$-, $R^2$ = $-C(CH_3)_3$, $R^3$ = OH, n = 1,

(TEBUCONAZOLE)

(II-2) $R^1$ = 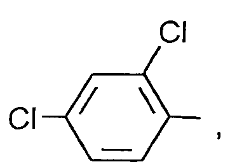 , $R^2$, $R^3$ = $-OCH_2CH(n-C_3H_7)O-$, n = 1,

(PROPICONAZOLE)

(II-3) $R^1$ = 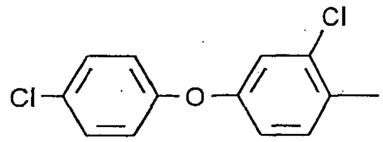 , n = 1,

$R^2$, $R^3$ = $-OCH_2CH(CH_3)0-$,

(DIFENCONAZOLE)

(II-4) $R^1$ = 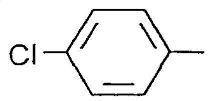 , $R^2$ = 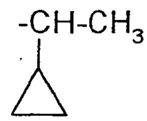 , $R^3$ = -OH, n = 1,

(CYPROCONAZOLE)

(II-5) $R^1$ = 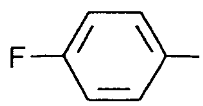 , $R^2$ = 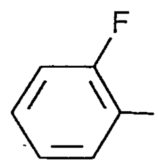 , $R^3$ = OH, n = 1,

(FLUTRIAFOL)

(II-6) $R^3$ = 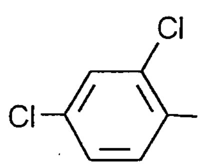 , $R^4$ = $-(CH_2)_3CH_3$, $R^5$ = OH, n = 1,

(HEXACONAZOLE)

(II-7) $R^1$ = 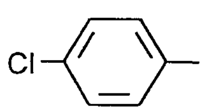 , $R^2$ = $-(CH_2)_3CH_3$, $R^3$ = CN, n = 1,

(MYCLOBUTANIL)

(II-8) $R^1$ = 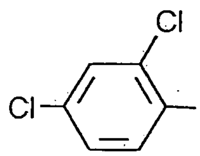 , $R^2 = -(CH_2)_2CH_3$, $R^3$ = H, n = 1,

(PENCONAZOLE)

(II-9) $R^1$ = 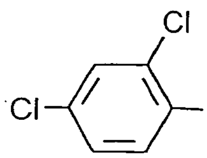 , $R^2$, $R^3$ = 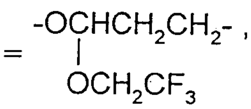 , n = 1,

(FURCONAZOLE)

(II-10) $R^1$ = 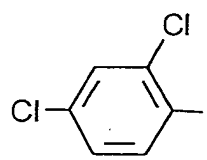 , $R^2$, $R^3$ = 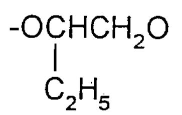 , n = 1,

(ETACONAZOLE)

(II-11) $R^1$ = 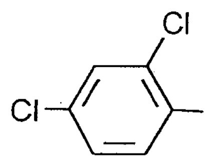 , $R^2$, $R^3$ = 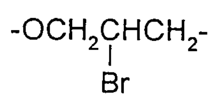 , n = 1,

(BROMUCONAZOLE)

(II-12) $R^1$ = 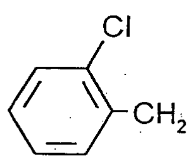 , $R^2$ = 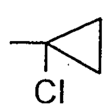 , $R^3$ = OH, n = 1,

(II-13) $R^1$ = 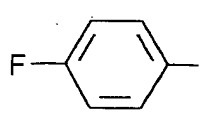 , $R^2$, $R^3$ = 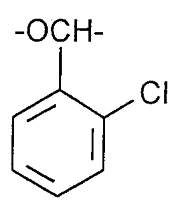 , n = 1,

(II-14) $R^1$ = 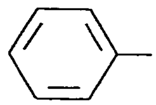 , $R^2$ = $-CH_2-CH_2$ 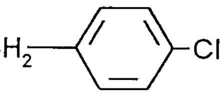 , n = 1, $R^3$ = CN,

(FENBUCONAZOLE)

(II-15) $R^1$ = 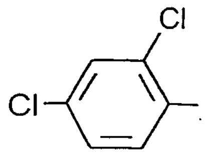 , $R^2$ = $CH_2OCF_2CHF_2$, $R^3$ = H, n = 1,

(TETRACONAZOLE)

(II-16) $R^1$ = 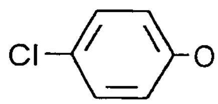 , $R^2$ = $-CH(OH)-C(CH_3)_3$, n = 0, $R^3$ = H,

(TRIADIMENOL)

(II-17) $R^1$ = 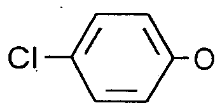 , $R^2$ = $-CO-C(CH_3)_3$, n = 0, $R^3$ = H,

(TRIADIMEFON)

(II-18) $R^1$ = 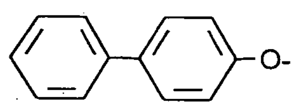 , $R^2$ = $-CH(OH)-C(CH_3)_3$, n = 0, $R^3$ = H,

(BITERTANOL)

(II-19) $R^1$ = 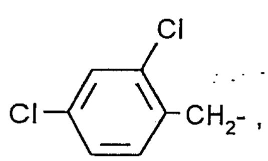 , $R^2$ = $-CH(OH)-C(CH_3)_3$; n = 0, $R^3$ = H,

(DICLOBUTRAZOL)

(II-20) $R^1$ und $R^2$ = 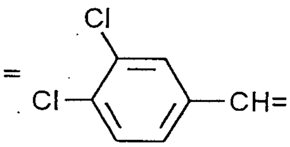 , $R^3$ = 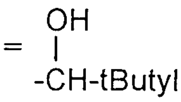 , n = 0,

(DINICONAZOL)

(2) Azol-Derivate der Formel

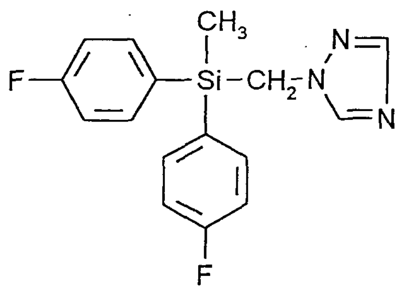

(III)

(FLUSILAZOLE)

(3) dem Azol-Derivat der Formel

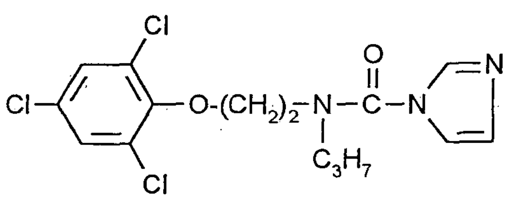

(IV)

(PROCHLORAZ)

(4) der Verbindung

$$S_x \qquad (V)$$

(5) Azol-Derivat der Formel

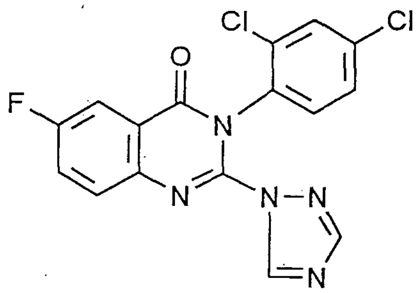

(VI)

(FLUQUINCONAZOLE)

(6) Heterocyclen der Formel

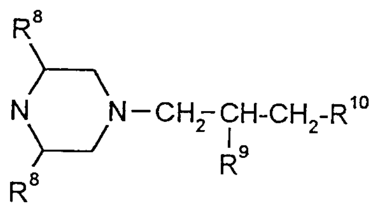

(VII)

(VII-1) $X = 0, R^8 = CH_3, R^9 = H, R^{10} = C_{10}H_{21}$

(TRIDEMORPH)

(VII-2) $X = 0, R^8 = CH_3, R^9 = H, R^{10} = C_9H_{19}$

(ALDIMORPH)

(VII-3) $X = 0, R^8 = CH_3, R^9 = CH_3, R^{10} =$ 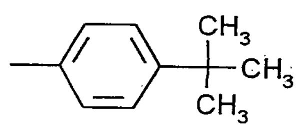

(FENPROPIMORPH)

(VII-4) $X = CH_2, R^8 = H, R^9 = CH_3, R^{10} =$ 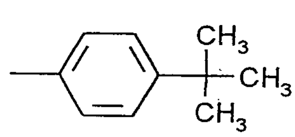

(FENPROPIDIN)

(7) Verbindung der Formel

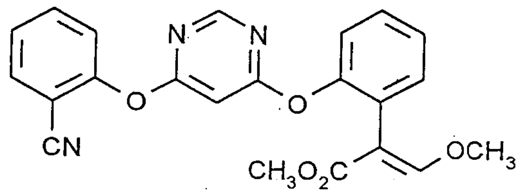

(VIII)

(8) Verbindung der Formel

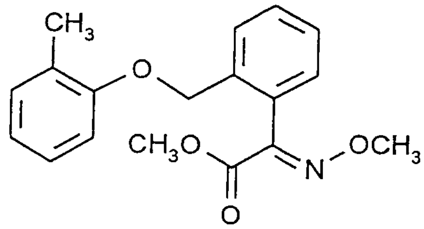

(IX)

(9) Verbindung der Formel

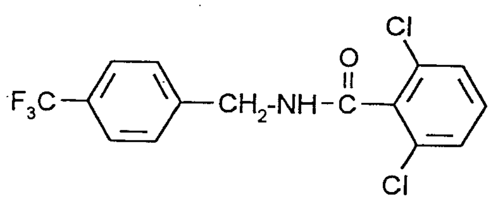

(X)

(10) Verbindung der Formel

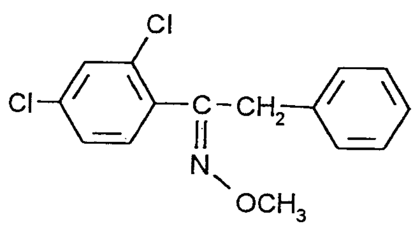

(XI)

(PYRIFENOX)

(11) Verbindung der Formel

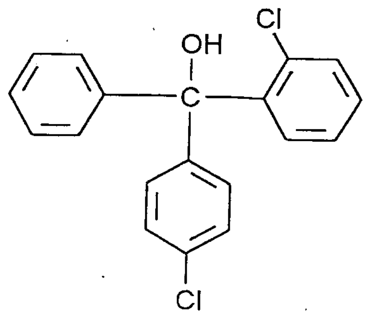

(XII)

(FENARIMOL)

(12) Verbindung der Formel

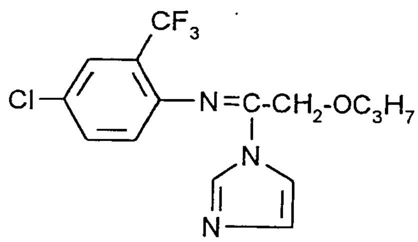

(XIII)

(TRIFLUMIZOLE)

(13) Verbindungen der Formel

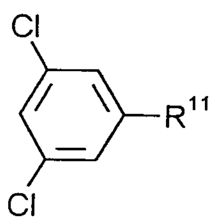

(XIV)

(XIV-1) $R^{11}$ = 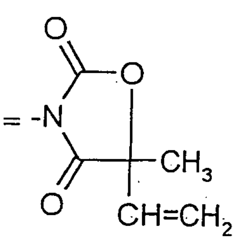

(VINCLOZOLIN)

(XIV-2) $R^{11}$ = 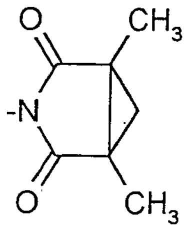

(PROCYMIDONE)

(XIV-3) $R^{11}$ = 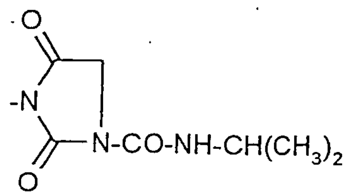

(IPRODIONE)

(14) Verbindungen der Formel

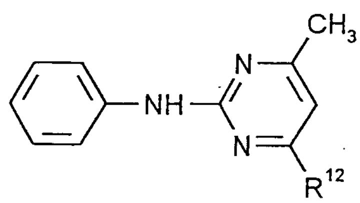

(XV)

(XV-1) $R^{12} = CH_3$

(PYRIMETHANIL)

(XV-2) $R^{12} = C{\equiv}C\text{-}CH_3$

(MEPANIPYRIM)

(15) Verbindungen der Formel

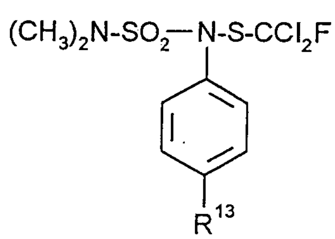

(XVI)

(XVI-1) $R^{13} = H$

(DICHLORFLUANID)

(XVI-2) $R^{13} = CH_3$

(TOLYLFLUANID)

(16) Verbindung der Formel

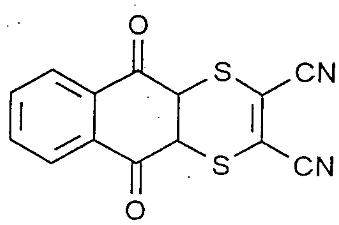

(XVII)

(DITHIANON)

(17) Verbindung der Formel

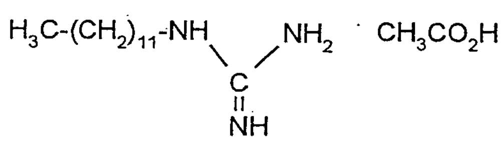

(XVIII)

(DODINE)

(18) Verbindung der Formel

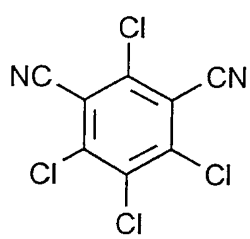

(XIX)

(CHLOROTHALONIL)

(19) Verbindung der Formel

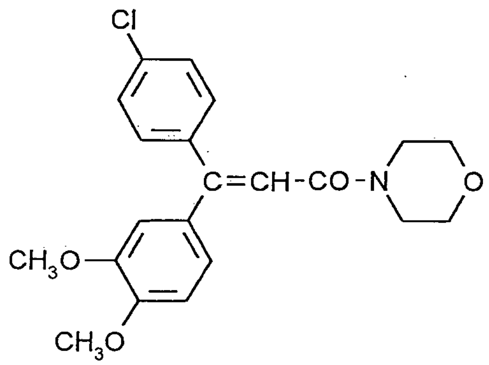

(XX)

(DIMETHOMORPH)

(20) Verbindung der Formel

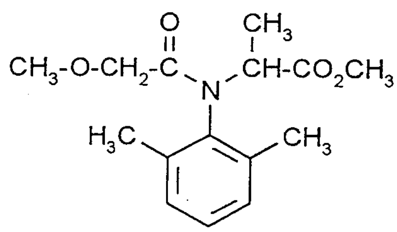

(XXI)

(METALAXYL)

(21) Verbindung der Formel

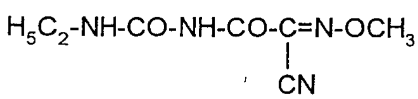

(XXII)

(CYMOXANILE)

(22) Verbindung der Formel

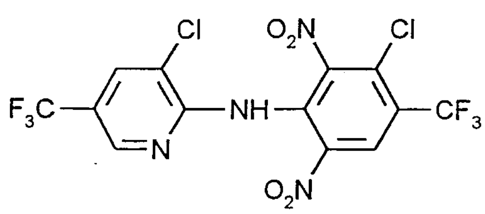

(XXIII)

(FLUAZINAM)

(23) Verbindung der Formel

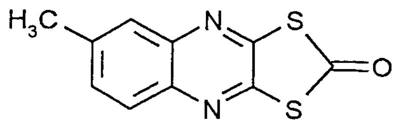

(XXIV)

(24) Verbindungen der Formel

$$Cl_3C-S-R^{14} \qquad (XXV)$$

(XXV-1) $R^{14}$ =

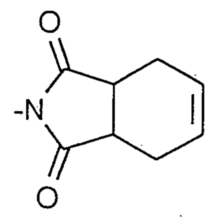

(CAPTAN)

(XXV-2) $R^{14}$ =

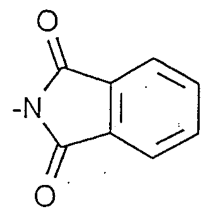

(FOLPET)

(25) Verbindung der Formel

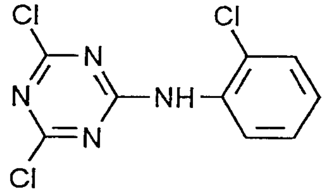

(XXVI)

(ANILAZIN)

(26) Verbindung der Formel

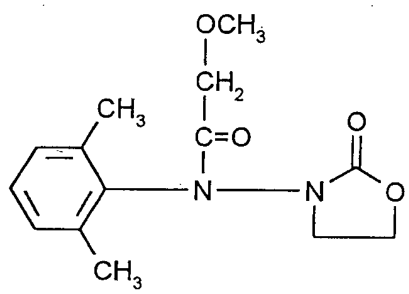

(XXVII)

(OXADIXYL)

(27) Verbindung der Formel

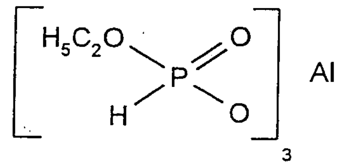

(XXVIII)

(FOSETYL AL)

(28) Verbindung der Formel

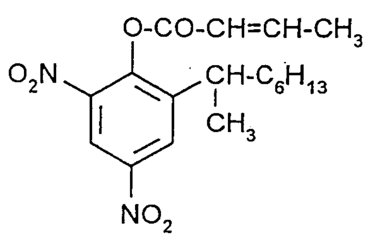

(XXIX)

(DINOCAP)

(29) Verbindung der Formel

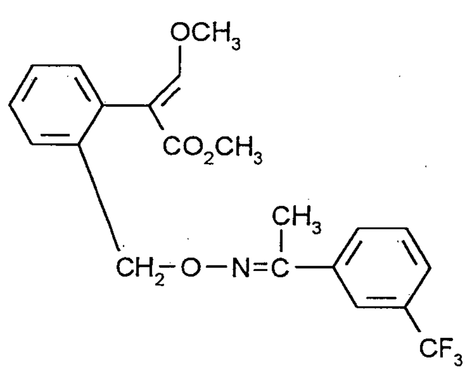

(XXX)

(30) Verbindung der Formel

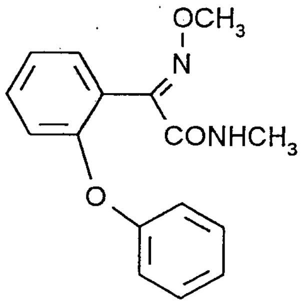

(XXXI)

(31) Verbindung der Formel

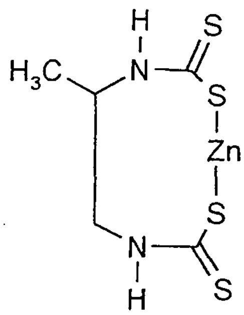

(XXXII)

(ANTRACOL)

(32) Verbindungen der Formel

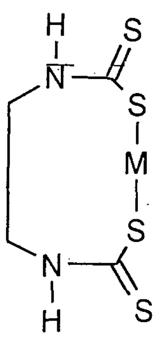

(XXXIII)

(XXXIII-1) M = Zn

(ZINEB)

(XXXIII-2) M = Mn

(MANEB)

(XXXIII-3) M=Mn/Zn (Mancozeb)

(33) Verbindung der Formel

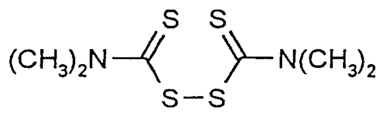

(XXXIV)

(THIRAM)

(34) Verbindung der Formel

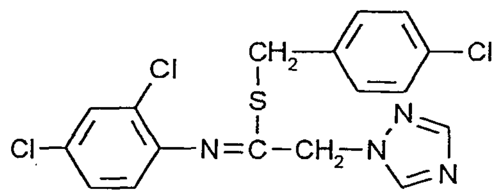

(XXXV)

(TYMIBENCONAZOLE)

(35) Verbindung der Formel

$$\left[\begin{array}{l}[(S\text{-}CS\text{-}NH\text{-}CH_2\text{-}CH_2\text{-}NH\text{-}CS\text{-}S\text{-}) \cdot Zn(NH_3)_3)] \\ \qquad (\text{-}S\text{-}CS\text{-}NH\text{-}CH_2\text{-}CH_2\text{-}NH\text{-}CS\text{-}S\text{-}]\end{array}\right]_y \qquad (XXXVI)$$

(METIRAM)

(36) Verbindung der Formel

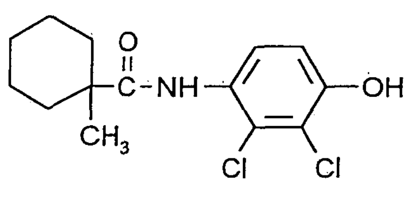

(XXXVII)

(37) Verbindung der Formel

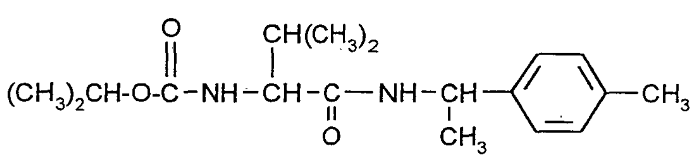

(XXXVIII)

(38) Verbindungen der Formel

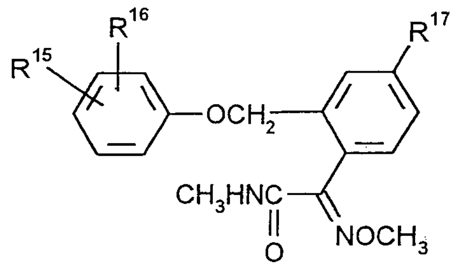

(XXXIX)

in welcher

$R^{15}$ und $R^{16}$ unabhängig voneinander für Wasserstoff, Halogen, Methyl oder Phenyl stehen und

$R^{17}$ für Wasserstoff oder Methyl steht,

(39) 8-$^t$Butyl-2-(N-ethyl-N-n-propylamino)-methyl-1,4-dioxaspiro[4,5]decan der Formel

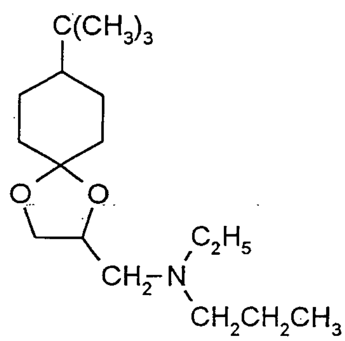

(XL)

(40) Verbindung der Formel

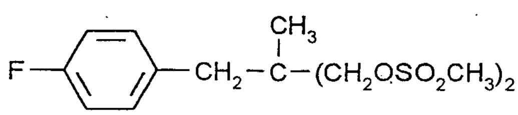

(41) Verbindung der Formel

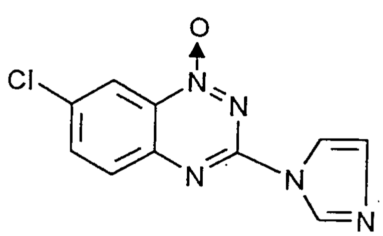

(42) Verbindung der Formel

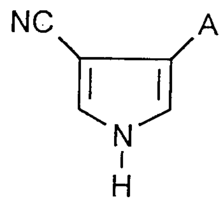

A = 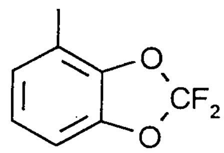 Fludioxonil

A = 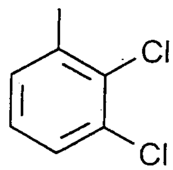 Fenpiclonil

A = 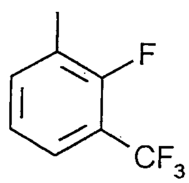

(43) Verbindung der Formel

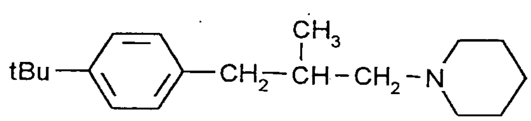

(44) Benzimidazol der Formel

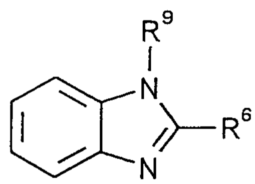

$R^9$ = CONHtBu; $R^6$ = -NHCOOMe Benomyl

$R^9$ = H; $R^6$ = 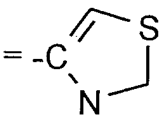 Thiabendazol

$R^9$ = H; $R^6$ = -NHCOOMe Carbendazin

(45) Verbindung der Formel

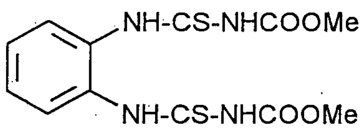

(46) Verbindung der Formel

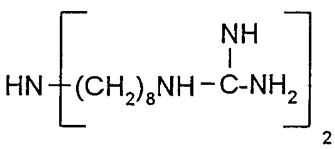

(47) Verbindung der Formel

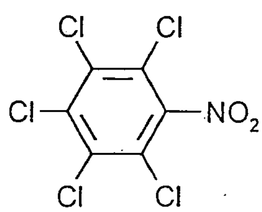

Die Wirkstoffe der Formel (I) sind bekannt z.B. aus EP-OS 192 060.

Die fungiziden Wirkstoffe sind ebenfalls bekannt.
So werden z.B. in folgenden Publikationen beschrieben:

(1) Verbindungen der Formel (II)
DE-OS 2 201 063
DE-OS 2 324 010
DE-OS 2 737 489
DE-OS 3 018 866
DE-OS 2 551 560
EP 47 594
DE 2 735 872

(2) Verbindung der Formel (III)
EP 68 813
US 4 496 551

(3) Verbindung der Formel (IV)

DE-OS 2 429 523
DE-OS 2 856 974
US 4 108 411

(6) Verbindungen der Formel (VII)
DL 140 041

(7) Verbindung der Formel (VIII)
EP 382 375

(8) Verbindung der Formel (IX)
EP 515 901

(9) Verbindung der Formel (X)
EP 314 422

(10) Verbindung der Formel (XI)
EP 49 854

(11) Verbindung der Formel (XII)
DE-OS 1 770 288
US 3 869 456

(13) Verbindungen der Formel (XIV)
DE 2 207 576
US 3 903 090
US 3 755 350
US 3 823 240

(14) Verbindungen der Formel (XV)
EP 270 111

(19) Verbindung der Formel (XX)
EP 219 756

(34) Verbindung der Formel (XXXV)
US 4 512 989

(38) Verbindungen der Formel (XXXIX)
EP 398 692

Verbindungen aus den Gruppen (15), (16), (17), (18), (23), (34), (25), (28), (31), (32), (33) und (38) bis (47) sind beispielsweise beschrieben in K.H. Büchel, "Pflanzenschutz und Schädlingsbekämpfung, Seiten 121-153, Georg Thieme-Verlag, Stuttgart, 1977. Die Verbindung der Gruppe (39) ist bekannt aus EP-OS 281 842.

Die erfindungsgemäßen Wirkstoffkombinationen enthalten neben dem Wirkstoff der Formel (I) mindestens einen fungiziden Wirkstoff z.B. ausgewählt aus den Verbindungen der Gruppen (1) bis (47). Sie können darüber hinaus auch weitere Wirkstoffe sowie übliche Hilfs- und Zusatzstoffe sowie Verdünnungsmittel enthalten.

Wenn die Wirkstoffe in den erfindungsgemäßen Wirkstoffkombinationen in bestimmten Gewichtsverhältnissen vorhanden sind, zeigt sich ein deutlicher synergistischer Effekt der Mischungen. Jedoch können die Gewichtsverhältnisse der Wirkstoffe in den Wirkstoffkombinationen in einem relativ großen Bereich variiert werden. Im allgemeinen entfallen auf 1 Gewichtsteil an Wirkstoff der Formel (I)
0,1 bis 10 Gewichtsteile, vorzugsweise
0,3 bis 3 Gewichtsteile an mindestens einem fungiziden Wirkstoff z.B. aus den Gruppen (1) bis (48).

Die erfindungsgemäßen Wirkstoffkombinationen besitzen sehr gute fungizide Eigenschaften. Sie lassen sich vor allem zur Bekämpfung von phytopathogenen Pilzen, wie Plasmodiophoromycetes, Oomycetes, Chytridiomycetes, Zygomycetes, Ascomycetes, Basidiomycetes, Deuteromycetes usw. einsetzen.

Die erfindungsgemäßen Wirkstoffkombinationen eignen sich besonders gut zur Bekämpfung von Getreidekrankheiten, wie Erysiphe, Cochliobolus, Septöria, Pyrenophora und Leptosphaeria, und gegen Pilzbefall an Gemüse,

Wein und Obst, beispielsweise gegen Venturia oder Podosphaera an Äpfeln, Uncinula an Reben oder Sphaeroteca an Gurken.

Die Wirkstoffkombinationen eignen sich auch zur Bekämpfung von tierischen Schädlingen, vorzugsweise Arthropoden, insbesondere Insekten, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.
Aus der Ordnung der Diplopoda z.B. Blaniulus guttulatus.
Aus der Ordnung der Chilopoda z.B. Geophilus carpophagus, Scutigera spec.
Aus der Ordnung der Symphyla z.B. Scutigerella immaculata.
Aus der Ordnung der Thysanura z.B. Lepisma saccharina.
Aus der Ordnung der Collembola z.B. Onychiurus armatus.
Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistöcerca gregaria.
Aus der Ordnung der Dermaptera z.B. Forficula auricularia.
Aus der Ordnung der Isoptera z.B. Reticulitermes spp..
Aus der Ordnung der Anoplura z.B. Pediculus humanus corporis, Haematopinus spp., Linognathus spp.
Aus der Ordnung der Mallophaga z.B. Trichodectes spp., Damalinea spp.
Aus der Ordnung der Thysanoptera z.B. Hercinothrips femoralis, Thrips tabaci.
Aus der Ordnung der Heteroptera z.B. Eurygaster spp., Dysdercus intermedius, Piesma quadrata, Cimex lectularius, Rhodnius prolixus, Triatoma spp.
Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Phylloxera vastatrix, Pemphigus spp., Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.
Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni; Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.
Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.
Aus der Ordnung der Hymenoptera z.B. Diprion spp., Hoplocampa spp., Lasius spp., Monomorium pharaonis, Vespa spp.
Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Die gute Pflanzenverträglichkeit der Wirkstoffkombinationen in den zur Bekämpfung von Pflanzenkrankheiten notwendigen Konzentrationen erlaubt eine Behandlung von oberirdischen Pflanzenteilen, von Pflanz- und Saatgut, und des Bodens.

Die erfindungsgemäßen Wirkstoffkombinationen können in die üblichen Formulierungen übergeführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln

und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe, sowie Butan, Propan, Stickstoff und Kohlendioxid. Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel. Als Emulgier-und/oder schaumerzeugende Mittel kommen in Frage: z.B. nichtionogene und anionische Emulgatoren, wie Polyoxyethylen-Fettsäureester, Polyoxyethylen-Fettalkoholether, z.B. Alkylarylpolyglycol-ether, Alkylsulfonate, Alkylsulfate, Arylsulfonate sowie Eiweißhydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffkombinationen können in den Formulierungen in Mischung mit anderen bekannten Wirkstoffen vorliegen, wie Fungizide, Insektizide, Akarizide und Herbizide, sowie in Mischungen mit Düngemitteln oder Pflanzenwachstumsregulatoren.

Die Wirkstoffkombinationen können als solche, in Form ihrer Formulierungen oder den daraus bereiteten Anwendungsformen, wie gebrauchsfertige Lösungen, emulgierbare Konzentrate, Emulsionen, Suspensionen, Spritzpulver, lösliche Pulver und Granulate, angewendet werden.

Die Anwendung geschieht in üblicher Weise, z.B. durch Gießen, Verspritzen, Versprühen, Verstreuen, Verstreichen, Trockenbeizen, Feuchtbeizen, Naßbeizen, Schlämmbeizen oder Inkrustieren.

Bei der Behandlung von Pflanzenteilen können die Wirkstoffkonzentrationen in den Anwendungsformen in einem größeren Bereich variiert werden. Sie liegen im allgemeinen zwischen 1 und 0,0001 Gew.-%, vorzugsweise zwischen 0,5 und 0,001 %.

Bei der Saatgutbehandlung werden im allgemeinen Wirkstoffmengen von 0,001 bis 50 g je Kilogramm Saatgut, vorzugsweise 0,01 bis 10 g benötigt.

Bei Behandlung des Bodens sind Wirkstoffkonzentrationen von 0,00001 bis 0,1 Gew.-%, vorzugsweise von 0,0001 bis 0,02 Gew.-%, am Wirkungsort erforderlich.

Die gute fungizide Wirkung der erfindungsgemäßen Wirkstoffkombinationen geht aus den nachfolgenden Beispielen hervor. Während die einzelnen Wirkstoffe oder die bekannten Wirkstoffkombinationen in der fungiziden Wirkung Schwächen aufweisen, geht aus den Tabellen der folgenden Beispiele eindeutig hervor, daß die gefundene Wirkung der erfindungsgemäßen Wirkstoffkombinationen größer ist als Summe der Wirkungen der einzelnen Wirkstoffe und auch größer als die Wirkungen der bekannten Wirkstoffkombinationen.

In den folgenden Beispielen wird als Wirkstoff der Formel (I) Imidacloprid eingesetzt. Die ebenfalls eingesetzten fungiziden Wirkstoffe werden in den Beispielen angegeben.

## Beispiel A

Drechslera graminea-Test (Gerste) / Saatgutbehandlung (syn. Helminthosporium gramineum)

Die Anwendung der Wirkstoffe erfolgt als Trockenbeizmittel. Sie werden zubereitet durch Abstrecken des jeweiligen Wirkstoffes mit Gesteinsmehl zu einer feinpulvrigen Mischung, die eine gleichmäßige Verteilung auf der Saatgutoberfläche gewährleistet.

Zur Beizung schüttelt man das infizierte Saatgut 3 Minuten lang mit dem Beizmittel in einer verschlossenen Glasflasche.

Das Saatgut setzt man in gesiebter, feuchter Standarderde eingebettet, in verschlossenen Petrischalen im Kühlschrank 10 Tage lang einer Temperatur von 4°C aus. Dabei wird die Keimung der Gerste und gegebenenfalls auch der Pilzsporen eingeleitet. Anschließend sät man die vorgekeimte Gerste mit 2 x 50 Korn 3 cm tief in eine Standarderde und kultiviert sie im Gewächshaus bei einer Temperatur von ca. 18°C in Saatkästen, die täglich 15 Stunden dem Licht ausgesetzt werden.

Ca. 3 Wochen nach der Aussaat erfolgt die Auswertung der Pflanzen auf Symptome der Streifenkrankheit.

Mischungen von Imidacloprid mit Tebuconazol, Captan, Euparen M, Bitertanol, Triazoxide, Thiram, Fludioxonil zeigen dabei deutliche Steigerung der Wirkung gegenüber der Behandlung mit den Einzelwirkstoffen.

**Beispiel B**

Fusarium nivale-Test (Weizen) / Saatgutbehandlung

Die Anwendung der Wirkstoffe erfolgt als Trockenbeizmittel. Sie werden zubereitet durch Abstrecken des jeweiligen Wirkstoffes mit Gesteinsmehl zu einer feinpulvrigen Mischung, die eine gleichmäßige Verteilung auf der Saatgutoberfläche gewährleistet.

Zur Beizung schüttelt man das infizierte Saatgut 3 Minuten lang mit dem Beizmittel in einer verschlossenen Glasflasche.

Den Weizen sät man mit 2 x 100 Korn 1 cm tief in eine Standarderde und kultiviert ihn im Gewächshaus bei einer Temperatur von ca. 10°C und einer relativen Luftfeuchtigkeit von ca. 95 % in Saatkästen, die täglich 15 Stunden dem Licht ausgesetzt werden.

Ca. 3 Wochen nach der Aussaat erfolgt die Auswertung der Pflanzen auf Symptome des Schneeschimmels.

Mischungen von Imidacloprid mit Euparen, Guazatine, Triadimenol, Difenconazole, Fenpiclonil zeigen dabei eine deutliche Steigerung der Wirkung gegenüber der Behandlung mit den Einzelwirkstoffen.

**Beispiel C**

Phaedon-Larven-Test

Lösungsmittel: 7 Gewichtsteile Dimethylformamid
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea) werden durch Tauchen in die Wirkstoffzubereitung der gewünschten Konzentration behandelt und mit Meerrettichblattkäfer-Larven (Phaedon cochleariae) besetzt, solange die Blätter noch feucht sind.

Nach 7 Tagen wird die Abtötung in % bestimmt.

Mischungen von Imidacloprid mit Anilazine, Benomyl, Bitertanol, Captan, Dichlofluanid, Mancozeb, Maneb, Metalaxyl, Prochloraz, Procymidone, Sulphur, Tolylfluanid, Triadimefon, Triadimenol zeigen dabei eine deutliche Steigerung der Wirkung gegenüber der Behandlung mit den Einzelwirkstoffen.

**Beispiel D**

Myzus-Test

Lösungsmittel: 7 Gewichtsteile Dimethylformamid
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea), die stark von der Pfirsichblattlaus (Myzus persicae) befallen sind, werden durch Tauchen in die Wirkstoffzubereitung der gewünschten Konzentration behandelt.

Nach 6 Tagen wird die Abtötung in % bestimmt.

Mischungen von Imidacloprid mit Bitertanol, Fenpropimorph, Prochloraz, Tebuconazol zeigen dabei eine deutliche Steigerung der Wirkung gegenüber der Behandlung mit den Einzelwirkstoffen.

**Beispiel E**

Botrytis-Test (Bohne)/protektiv

Lösungsmittel: 4,7 Gewichtsteile Aceton
Emulgator: 0,3 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit bespritzt man junge Pflanzen mit der Wirkstoffzubereitung bis zur Tropfnässe. Nach Antrocknen des Spritzbelages werden auf jedes Blatt 2 kleine mit Botrytis cinerea bewachsene Agarstückchen aufgelegt. Die inokulierten Pflanzen werden in einer abgedunkelten, feuchten Kammer bei 20°C aufgestellt. 3 Tage nach der Inokulation wird die Größe der Befallsflecken auf den Blättern ausgewertet.

Mischungen von Imidacloprid mit Procymidone, Tolyfluanid, Tebuconazol zeigen dabei eine deutliche Steigerung der Wirkung gegenüber der Behandlung mit den Einzelverbindungen.

**Beispiel F**

Podosphaera-Test (Apfel) / protektiv

Lösungsmittel: 4,7 Gew.-Teile Aceton
Emulgator: 0,3 Gew.-Teile Alkyl-Aryl-Polyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit bespritzt man junge Pflanzen mit der Wirkstoffzubereitung bis zur Tropfnässe. Nach Antrocknen des Spritzbelages werden die Pflanzen durch Bestäuben mit Konidien des Apfelmehltauerregers Podosphaera leucotricha inokuliert.

Die Pflanzen werden dann im Gewächshaus bei 23°C und einer relativen Luftfeuchtigkeit von ca. 70 % aufgestellt.

10 Tage nach der Inokulation erfolgt die Auswertung.

Mischungen von Imidacloprid mit Fenpropidin, Triadimenol zeigen dabei eine deutliche Steigerung der Wirkung gegenüber der Behandlung mit den Einzelverbindungen.

**Patentansprüche**

1. Mittel gegen Pflanzenschädlinge, die Verbindungen der allgemeinen Formel (I)

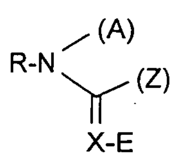

(I),

in welcher

X für =CH- oder =N- steht,

E für $NO_2$ oder CN steht,

R für Heteroarylmethyl steht mit bis zu 6 Ringatomen und N, O, S als Heteroatome, welche gegebenenfalls substituiert sind durch Alkyl mit 1 bis 4 Kohlenstoffatomen, Alkoxy mit 1 bis 4 Kohlenstoffatomen, Alkylthio mit 1 bis 4 Kohlenstoffatomen, Halogenalkyl mit 1 bis 4 Kohlenstoffatomen und 1 bis 5 Halogenatomen, wobei die Halogenatome gleich oder verschieden sind, Hydroxy; Halogen; Cyano; Nitro; Amino; Monoalkyl- und Dialkylamino mit 1 bis 4 Kohlenstoffatomen je Alkylgruppe,

A für Wasserstoff oder $C_{1-4}$-Alkyl steht,

Z für $C_{1-4}$-Alkyl oder -NH($C_{1-4}$-Alkyl) steht oder

A und Z gemeinsam mit den Atomen, an welche sie gebunden sind, einen gesättigten oder ungesättigten, 5- bis 7-gliedrigen heterocyclischen Ring bilden, der weitere 1 oder 2 gleiche oder verschiedene Heteroatome und/oder Heterogruppen enthalten kann, wobei als Heteroatome Sauerstoff oder Stickstoff und als Heterogruppen N-Alkyl in Frage kommen, wobei Alkyl der N-Alkyl-Gruppe 1 bis 4 Kohlenstoffatome enthält,

in Mischung mit einem Fungizid ausgewählt aus den folgenden Verbindungen

(1) Azol-Derivate der Formel

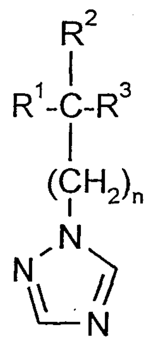

(II)

(II-1) $R^1$ = 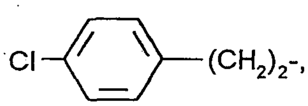, $R^2 = -C(CH_3)_3$, $R^3 = OH$, $n = 1$,

(TEBUCONAZOLE)

(II-2) $R^1$ = 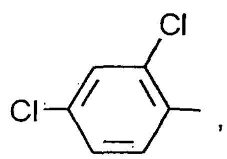, $R^2$, $R^3 = -OCH_2CH(n\text{-}C_3H_7)O\text{-}$, $n = 1$,

(PROPICONAZOLE)

(II-3) $R^1$ = 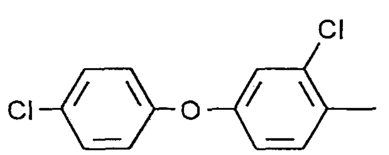, $n = 1$,

$R^2$, $R^3 = -OCH_2CH(CH_3)0\text{-}$,

(DIFENCONAZOLE)

(II-5) $R^1$ = 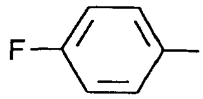, $R^2$ = 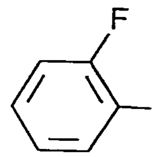, $R^3$ = OH, n = 1,

(FLUTRIAFOL)

(II-6) $R^3$ = 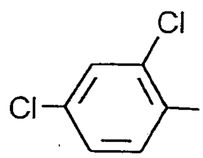, $R^4 = -(CH_2)_3CH_3$, $R^5$ = OH, n = 1,

(HEXACONAZOLE)

(II-7) $R^1$ = 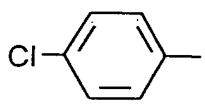, $R^2 = -(CH_2)_3CH_3$, $R^3$ = CN, n = 1,

(MYCLOBUTANIL)

(II-8) $R^1$ = 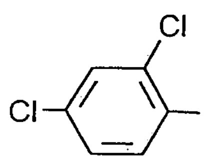, $R^2 = -(CH_2)_2CH_3$, $R^3$ = H, n = 1,

(PENCONAZOLE)

(II-9) $R^1$ = 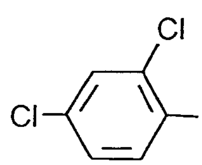, $R^2$, $R^3$ = 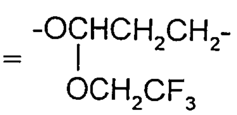, n = 1,

(FURCONAZOLE)

(II-10) $R^1$ = 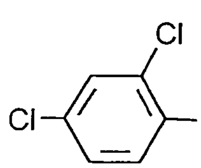, $R^2$, $R^3$ = 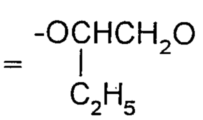, n = 1,

(ETACONAZOLE)

(II-11) $R^1$ = 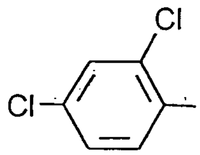, $R^2$, $R^3$ = 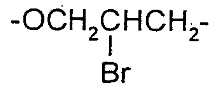, n = 1,

(BROMUCONAZOLE)

(II-12) $R^1$ = 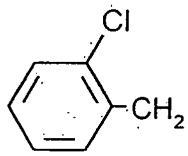, $R^2$ = 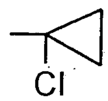, $R^3$ = OH, n = 1,

(II-13) $R^1$ = 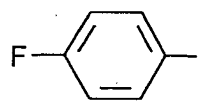, $R^2$, $R^3$ = 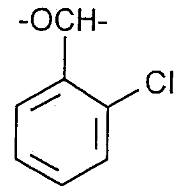, n = 1,

(II-14) $R^1$ = 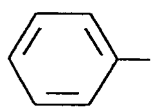, $R^2$ = 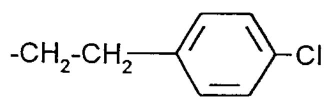, n = 1, $R^3$ = CN,

(FENBUCONAZOLE)

(II-15) $R^1$ = 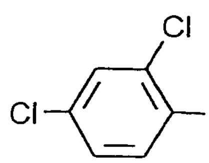, $R^2$ = $CH_2OCF_2CHF_2$, $R^3$ = H, n = 1,

(TETRACONAZOLE)

(II-16) $R^1$ = 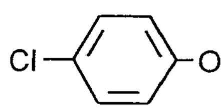, $R^2$ = $-CH(OH)-C(CH_3)_3$, n = 0, $R^3$ = H,

(TRIADIMENOL)

(II-17) $R^1$ = 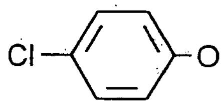, $R^2$ = -CO-C(CH$_3$)$_3$, n = 0, $R^3$ = H,

(TRIADIMEFON)

(II-18) $R^1$ = 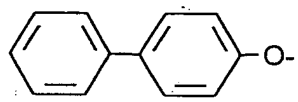, $R^2$ = -CH(OH)-C(CH$_3$)$_3$, n = 0,
$R^3$ = H,

(BITERTANOL)

(II-19) $R^1$ = 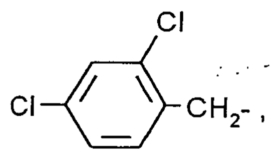 $R^2$ = -CH(OH)-C(CH$_3$)$_3$, n = 0, $R^3$ = H,

(DICLOBUTRAZOL)

(II-20) $R^1$ und $R^2$ = 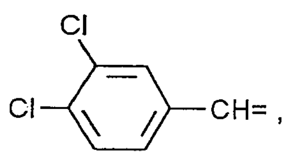, $R^3$ = 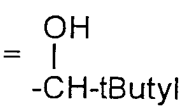, n = 0,

(DINICONAZOL)

(2) Azol-Derivate der Formel

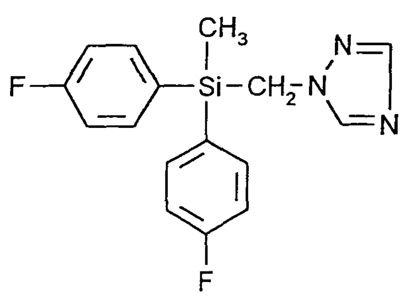

(III)

(FLUSILAZOLE)

(3) dem Azol-Derivat der Formel

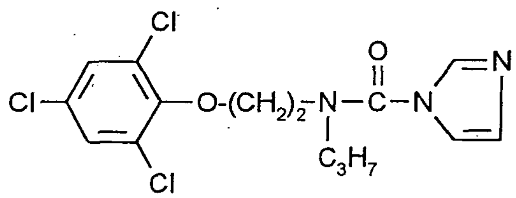

(IV)

(PROCHLORAZ)

(4) der Verbindung

$S_x$ (V)

(5) Azol-Derivat der Formel

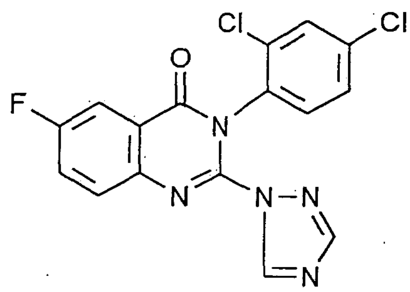

(VI)

(FLUQUINCONAZOLE)

(6) Heterocyclen der Formel

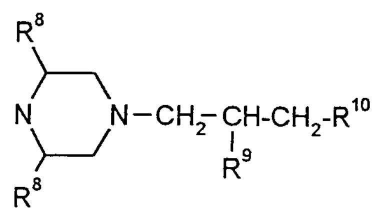

(VII)

(VII-1) $X = 0, R^8 = CH_3, R^9 = H, R^{10} = C_{10}H_{21}$

(TRIDEMORPH)

(VII-2) $X = 0, R^8 = CH_3, R^9 = H, R^{10} = C_9H_{19}$

(ALDIMORPH)

(VII-3) X = 0, $R^8 = CH_3$, $R^9 = CH_3$, $R^{10}$ = 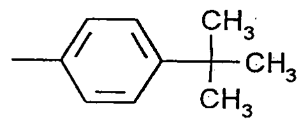

(FENPROPIMORPH)

(VII-4) X = $CH_2$, $R^8$ = H, $R^9 = CH_3$, $R^{10}$ = 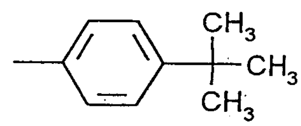

(FENPROPIDIN)

(7) Verbindung der Formel

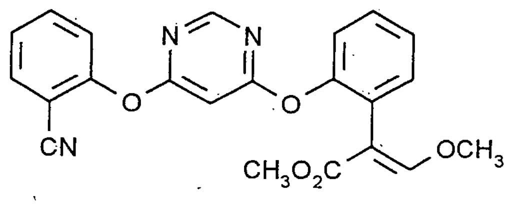

(VIII)

(8) Verbindung der Formel

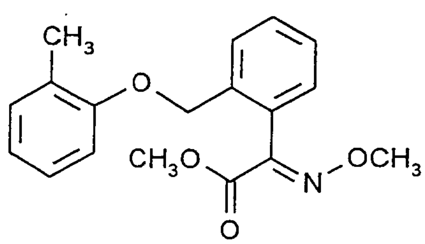

(IX)

(9) Verbindung der Formel

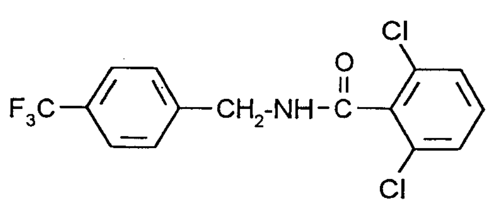

(X)

(10) Verbindung der Formel

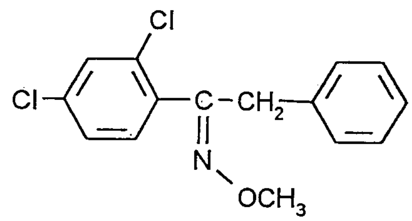

(XI)

(PYRIFENOX)

(11) Verbindung der Formel

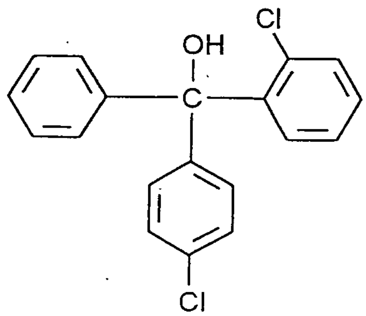

(XII)

(FENARIMOL)

(12) Verbindung der Formel

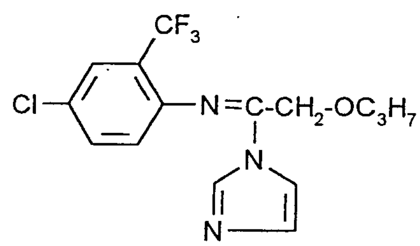

(XIII)

(TRIFLUMIZOLE)

(13) Verbindungen der Formel

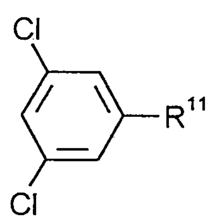

(XIV)

(XIV-1) 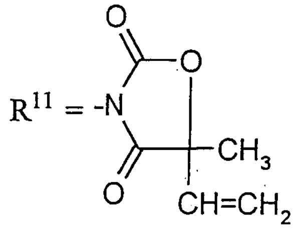

(VINCLOZOLIN)

(XIV-2) 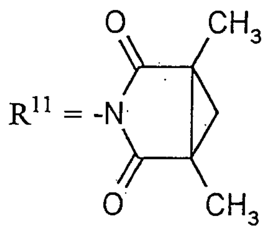

(PROCYMIDONE)

(XIV-3) 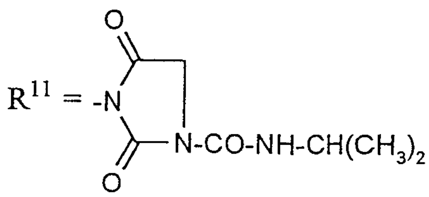

(IPRODIONE)

(14) Verbindungen der Formel

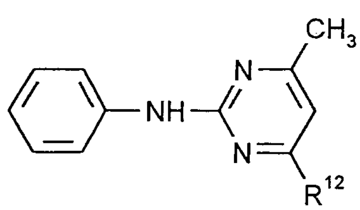 (XV)

(XV-1) $R^{12} = CH_3$

(PYRIMETHANIL)

(XV-2) $R^{12} = C{\equiv}C\text{-}CH_3$

(MEPANIPYRIM)

(15) Verbindungen der Formel

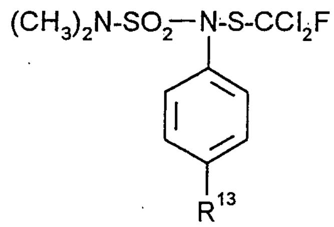

(XVI)

(XVI-1) $R^{13}$ = H

(DICHLORFLUANID)

(XVI-2) $R^{13} = CH_3$

(TOLYLFLUANID)

(16) Verbindung der Formel

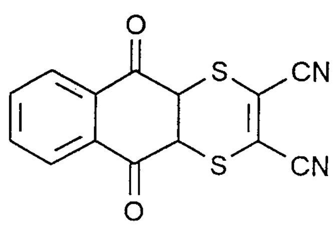

(XVII)

(DITHIANON)

(17) Verbindung der Formel

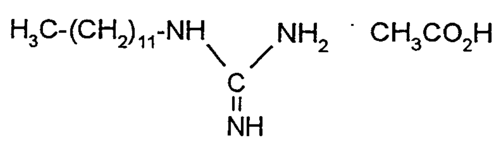

(XVIII)

(DODINE)

(18) Verbindung der Formel

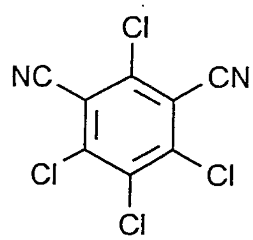

(XIX)

(CHLOROTHALONIL)

(19) Verbindung der Formel

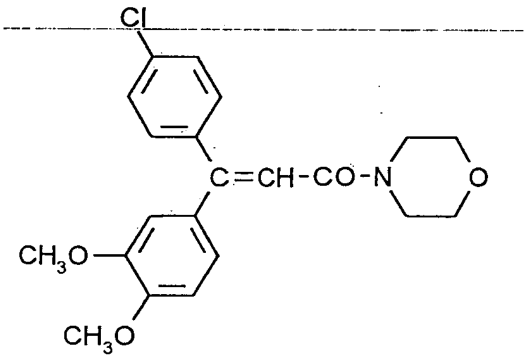

(XX)

(DIMETHOMORPH)

(20) Verbindung der Formel

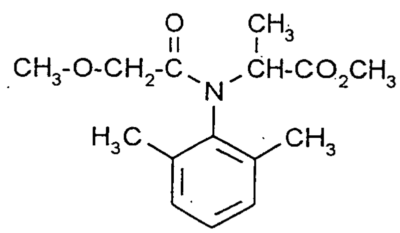

(XXI)

(METALAXYL)

(21) Verbindung der Formel

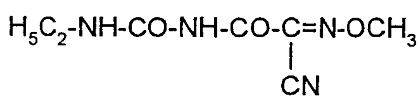

(XXII)

(CYMOXANILE)

(22) Verbindung der Formel

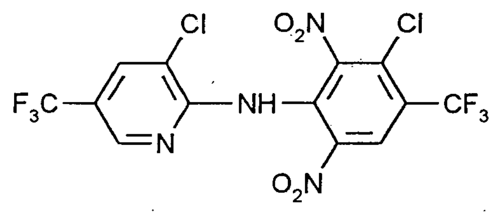

(XXIII)

(FLUAZINAM)

(23) Verbindung der Formel

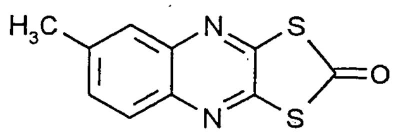

(XXIV)

(24) Verbindungen der Formel

$Cl_3C\text{-}S\text{-}R^{14}$ (XXV)

(XXV-1) $R^{14}$ =

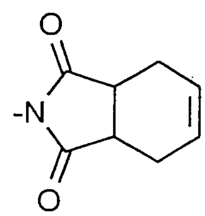

(CAPTAN)

(XXV-2) $R^{14}$ =

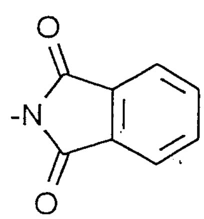

(FOLPET)

(25) Verbindung der Formel

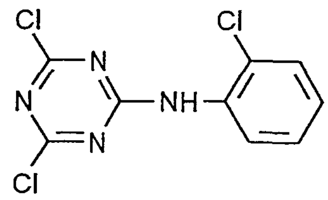

(XXVI)

(ANILAZIN)

(26) Verbindung der Formel

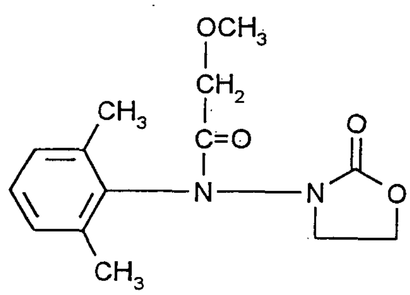

(XXVII)

(OXADIXYL)

(27) Verbindung der Formel

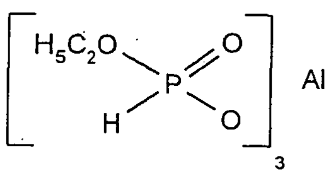

(XXVIII)

(FOSETYL AL)

(28) Verbindung der Formel

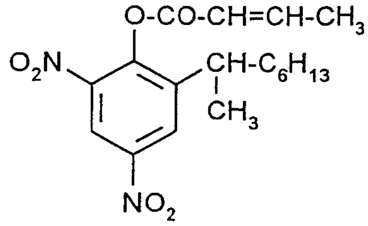

(XXIX)

(DINOCAP)

(29) Verbindung der Formel

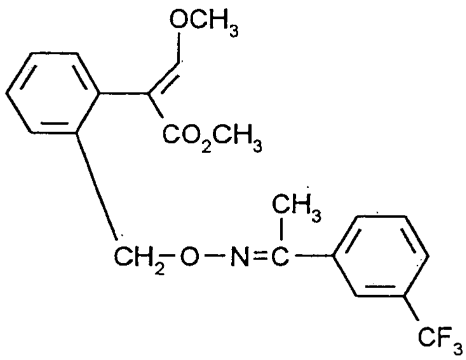

(XXX)

(30) Verbindung der Formel

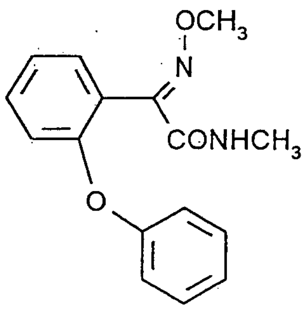

(XXXI)

(31) Verbindung der Formel

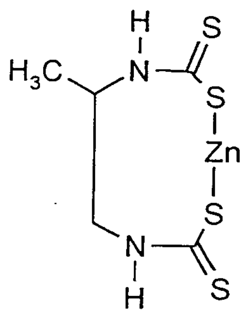

(XXXII)

(ANTRACOL)

(32) Verbindungen der Formel

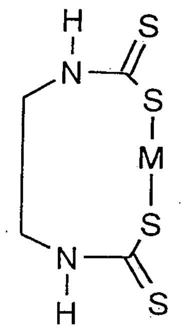

(XXXIII)

(XXXIII-1) M = Zn

(ZINEB)

(XXXIII-2) M = Mn

(MANEB)

(XXXIII-3) M=Mn/Zn (Mancozeb)

(33) Verbindung der Formel

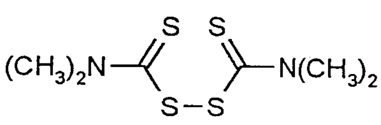

(XXXIV)

(THIRAM)

(34) Verbindung der Formel

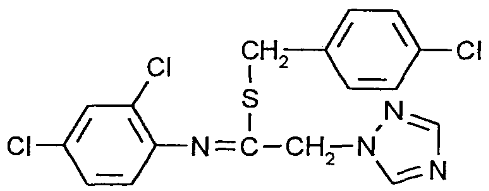

(XXXV)

(TYMIBENCONAZOLE)

(35) Verbindung der Formel

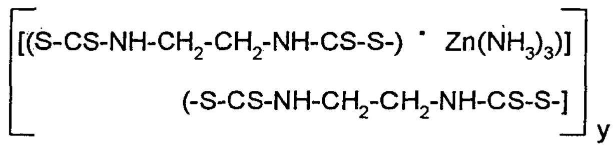

(XXXVI)

(METIRAM)

(3 6) Verbindung der Formel

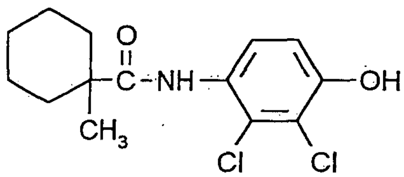

(XXXVII)

(37) Verbindung der Formel

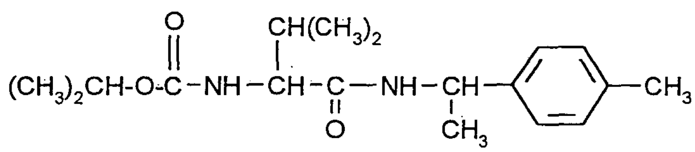

(XXXVIII)

(38) Verbindungen der Formel

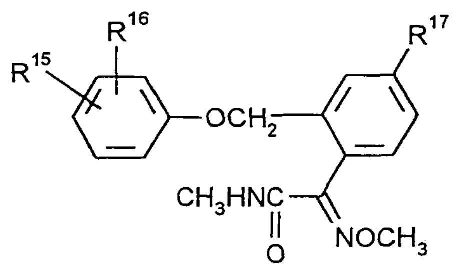

(XXXIX)

in welcher

$R^{15}$ und $R^{16}$ unabhängig voneinander für Wasserstoff, Halogen, Methyl oder Phenyl stehen und

$R^{17}$ für Wasserstoff oder Methyl steht,

(39) 8-$^{t}$Butyl-2-(N-ethyl-N-n-propylamino)-methyl-1,4-dioxaspiro[4,5]decan der Formel

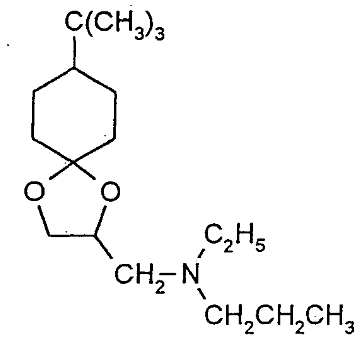

(XL)

(40) Verbindung der Formel

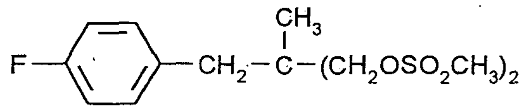

(41) Verbindung der Formel

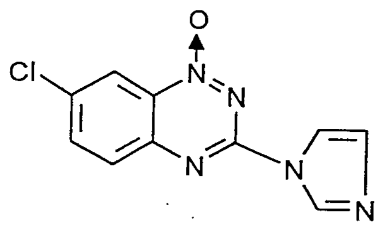

(42) Verbindung der Formel

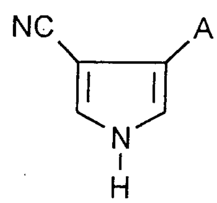

A = 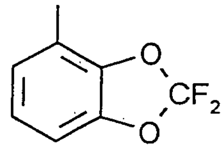 Fludioxonil

A = 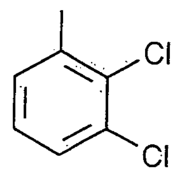 Fenpiclonil

A = 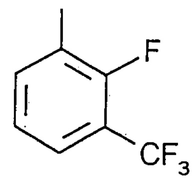

(43) Verbindung der Formel

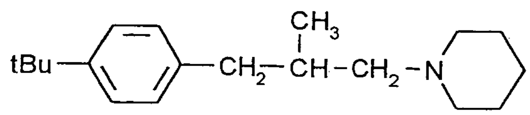

(44) Benzimidazol der Formel

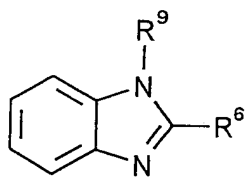

$R^9$ = CONHtBu; $R^6$ = NHCOOMe Benomyl

$R^9$ = H; $R^6$ = 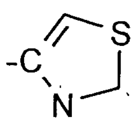 Thiabendazol

$R^9$ = H; $R^6$ = NHCOOMe Carbendazin

(45) Verbindung der Formel

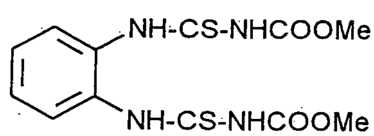

(46) Verbindung der Formel

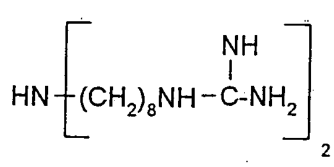

(47) Verbindung der Formel

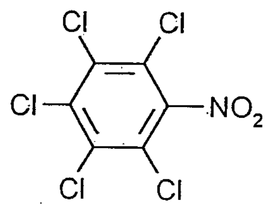

in einem synergistisch wirksamen Mengenverhältnis

enthalten.

**2.** Mittel gemäß Anspruch 1, worin auf 1 Gewichtsteil an Wirkstoff der Formel (I) 0,1 bis 1.0 Gewichtsteile an fungizidem Wirkstoff entfallen.

**3.** Mittel gemäß Anspruch 1, worin auf 1 Gewichtsteil an Wirkstoff der Formel (I) 0,3 bis 3 Gewichtsteile an fungizidem Wirkstoff entfallen.

**4.** Verfahren zur Bekämpfung von Pilzen und Insekten, **dadurch gekennzeichnet, daß** man Wirkstoffkombinationen gemäß Ansprüchen 1 bis 3 auf die Pilze, Insekten und/oder deren Lebensraum einwirken läßt.

**5.** Verwendung von Wirkstoffkombinationen gemäß Ansprüchen 1 bis 3 zur Bekämpfung von Pilzen und Insekten.